# EUROPÄISCHE PATENTSCHRIFT

(11) **EP 1 430 237 B1**
(45) Veröffentlichungstag und Bekanntmachung des Hinweises auf die Patenterteilung: **30.03.2005**
(21) Anmeldenummer: 02774138.8
(22) Anmeldetag: 13.09.2002
(51) Int. Cl.: F16H 1/00, F16H 1/14

(54) **VORRICHTUNG UND VERFAHREN ZUR EINSTELLUNG DES VON EINER REIBUNGSKUPPLUNG ÜBERTAGENEN DREHMOMENTES**
DEVICE AND METHOD FOR ADJUSTING THE TORQUE TRANSMITTED BY A FRICTION CLUTCH
DISPOSITIF ET PROCEDE POUR REGLER LE COUPLE TRANSMIS PAR UN EMBRAYAGE A FRICTION

(30) Priorität: 18.09.2001 AT 7192001
(43) Veröffentlichungstag der Anmeldung: 23.06.2004
(73) Patentinhaber: Magna Drivetrain AG & Co KG, 8502 Lannach (AT)
(72) Erfinder: PARIGGER, Martin, A-8063 Eggersdorf (AT)
(74) Vertreter: Kovac, Werner
(86) Internationale Anmeldenummer: PCT/AT2002/000265
(87) Internationale Veröffentlichungsnummer: WO 2003/025422

(56) Entgegenhaltungen:
- WO-A-01/59331
- US-A- 4 263 824
- US-A- 4 976 347
- US-B1- 6 269 926

## Beschreibung

Die Erfindung betrifft eine Vorrichtung zur Einstellung des von einer Reibungskupplung übertragenen Drehmomentes, mit einer aus einem Elektromotor, einem Untersetzungsgetriebe und einem Mechanismus zur Umsetzung der rotatorischen Bewegung in eine Verschiebung einer Andruckplatte der Kupplung bestehenden Aktuatorkette. Reibungskupplungen mit einstellbarem übertragenem Drehmoment werden beispielsweise in Antriebssträngen von Kraftfahrzeugen, insbesondere allradangetriebenen Kraftfahrzeugen, als Differentialsperre oder zum Zuschalten eines Achsantriebes, eingesetzt.

Die Merkmale der Oberbegriffe von Anspruch 1 bzw. 6 sind aus der WO-A-01/59331 bekannt.

Das bedeutet nicht nur gesteuertes Einrücken der Reibungskupplung, sondern längeren Betrieb mit genau eingestelltem Drehmoment, entsprechend dem zu übertragenden Drehmoment. Dabei ist das übertragene Drehmoment nach fahrdynamischen Erfordernissen mittels einer Regelbeziehungsweise Steuervorrichtung kontinuierlich variabel. Hohe zu übertragende Momente erfordern erhebliche Anpresskräfte und somit Betätigungskräfte, erhöht noch durch das Vorhandensein einer im Öffnungssinne wirkenden Rückstellfeder.

Zur Erzeugung hoher und dosierbarer Betätigungskräfte wird das Drehmoment des Elektromotors durch ein Untersetzungsgetriebe verstärkt und mittels eines Mechanismus in eine auf die Reibungskupplung wirkende achsiale Betätigungskraft umgesetzt. Die Mechanismen sind Rampenringe mit oder ohne Kugeln, Kurvenscheiben oder andere Mechanismen.

Weitere gattungsgemäße Reibungskupplungen mit Rampenringen sind etwa aus der WO 91/12152; US 4,976,347; EP-A-368140 bekannt. Bei allen diesen wird die für die Übertragung des gewünschten Drehmomentes erforderliche Achsialkraft durch Ansteuerung des Elektromotors nach einem der üblichen Leistungssteuerverfahren (Strom und/oder Spannungsregelung, Pulsweitenmodulation etc.) eingestellt. Der Zusammenhang zwischen erforderlichem Motorstrom und gewünschtem Drehmoment der Reibungskupplung wird dazu einer Kennlinie entnommen. Oft werden auch zwei verschiedene Kennlinien verwendet, die eine beim Erhöhen, die andere beim Senken des Drehmomentes, um der Reibungshysterese Rechnung zu tragen.

Bei der EP-A-368140 wird als Untersetzungsgetriebe ein reibungsbehaftetes Schneckengetriebe eingesetzt und zur Überwindung von Reibungshysterese-Effekten und zur Reduzierung der Reibungskräfte in dem Mechanismus eine Wechsellast erzeugt. Bei der WO 91/12152 und auch bei der US 4,976,347 werden als Untersetzungsgetriebe reibungsarme Stirnradgetriebe und relativ steife Übertragungsmechanismen verwendet.

Diese Steuerverfahren sind nur bei geringer Reibungshysterese des Untersetzungsgetriebes und des Mechanismus brauchbar. Deshalb werden Stirnradgetriebe verwendet, deren Untersetzung aber begrenzt ist. Insbesondere muss die Kennlinie für den Kraftabbau deutlich im positiven Bereich liegen, damit eine genaue Einstellung überhaupt möglich ist. Weiters wird die Genauigkeit der Einstellung dadurch beeinträchtigt, dass sich der Zusammenhang zwischen dem Moment des Elektromotors und dem übertragenen Drehmoment verändert, insbesondere durch:
- unterschiedliche Reibungsverhältnisse in der Betätigungskette (Temperaturschwankungen, Einlaufeffekte, Übergang Haftreibung/Gleitreibung, und
- unterschiedliche Kraft der Kupplungs-Rückstellfeder (Fertigungstoleranzen, Kupplungs-Lüftspiel)

Auch ist der Zusammenhang zwischen dem Moment des Elektromotors und dem Motorstrom mit größeren Ungenauigkeiten behaftet:
- Fertigungstoleranzen,
- Feldschwächung bei steigender Temperatur des Elektromotors,
- Ungleichförmigkeit des Drehmomentes über den Verdrehwinkel.

Aus diesen Gründen muss bei den bekannten Systemen die gesamte Aktuatorkette, vom Elektromotor bis einschließlich zu dem Mechanismus, hinsichtlich minimaler Reibungshysterese optimiert werden, was meist kleine Untersetzung und einen relativ großen Motor erfordert, jedenfalls aber zusätzliche Kosten verursacht und auch noch den Nachteil hat, dass zum Halten eines hohen übertragenen Kupplungsmomentes permanent ein hoher Motorstrom fließen muss. Da dieser Betriebszustand normalerweise zu thermischer Überlastung des Motors führt, ist eine elektromagnetisch betätigte Motorbremse nötig, was weitere Kosten verursacht und das dynamische Verhalten der Aktuatorkette negativ beeinflusst, da jedesmal vor Beginn der Drehmomentverstellung die Bremse gelöst werden muss. Bei Verwendung eines Untersetzungsgetriebes mit selbsthemmender Schnecke ist zwar keine Bremse erforderlich, jedoch liegt deren Kennlinie für den Kraftabbau so tief im negativen Bereich, dass sie aus diesem Grund nicht in Frage kommt.

Es ist daher Ziel der Erfindung, eine genaue und schnelle Einstellung des von einer Reibungskupplung übertragenen Drehmomentes zu ermöglichen, auch bei hoher Reibung in der Aktuatorkette, bei schwankender Reibung und unbeeinträchtigt von anderen Störeinflüssen.

Eine erfindungsgemäße Vorrichtung zeichnet sich durch die Merkmale des Anspruchs 1 aus.

Die Steuerung der Reibungskupplung erfolgt somit nicht durch Steuerung der vom Elektromotor ausgeübten "Kraft", sondern auf dem Umweg über eine Positionssteuerung. Durch diesen erfindungsgemäßen Umweg werden aber die Nachteile der bekannten Systeme beseitigt, insbesondere wird die Reibungshysterese umgangen. Zwischen der Stellung eines der Glieder der Aktuatorkette und der Betätigungskraft - und damit dem übertragenen Drehmoment - der Reibungskupplung besteht nämlich ein für die Steuerung besonders geeigneter Zusammenhang, weil die mechanische Aktuatorkette und insbesondere die Reibungskupplung selbst immer eine gewisse elastische Nachgiebigkeit aufweist. Durch sie erhält die Kennlinie auch die für eine genaue Steuerung nötige Steigung.

Da Reibungsverluste hauptsächlich in dem sehr steifen Untersetzungsgetriebe auftreten und die Elastizitäten hauptsächlich in dem daran in Kraftflussrichtung anschließenden Teil, insbesondere in der Reibungskupplung selbst, ist der Zusammenhang zwischen der Stellung eines der Glieder der Aktuatorkette und der Betätigungskraft der Reibungskupplung weitgehend unabhängig von den Reibungsverhältnissen in den steifen Gliedern der Aktuatorkette, insbesondere im Untersetzungsgetriebe.

Wesentlich ist auch noch, dass der Sensor an einem Glied der Aktuatorkette angreift, das in Kraftflussrichtung vor einem wesentlichen Teil der Elastizität liegt, wobei nach diesem Glied, beziehungsweise dem Sensor nur mehr wenig Reibung herrschen soll. Das wird oft der Mechanismus zur Bewegungsumsetzung sein. Aufgrund dieser Erkenntnis wird mit der Erfindung das "Wunder" vollbracht, ein reibungsbehaftetes System reibungshysteresefrei zu steuern.

Damit wird es auch möglich, ganz bewusst und mit Vorteil Getriebemotoren mit hoher innerer Reibung (Schneckengetriebe, Gleitlager) einzusetzen. Das begünstigt grosse Untersetzungen und sehr kleine hochtourige Elektromotoren und bringt zusätzlich zu den niederen Kosten auch noch den Vorteil, dass hohe Kupplungsmomente mit kleinem Motorstrom gesteuert und auch gehalten werden können; bei selbsthemmenden Schnekkengetrieben - die dank der Erfindung nun mit Vorteil einsetzbar sind - können hohe Kupplungsmomente sogar ganz ohne Strom gehalten werden.

Als sehr vorteilhaft hat es sich erwiesen, den Sensor an einer Welle des Untersetzungsgetriebes oder des Elektromotors anzuordnen (Anspruch 2), und als besonders vorteilhaft, den Sensor als Inkrementalgeber an der Ankerwelle des Elektromotors vorzusehen (Anspruch 3). Damit kann direkt der Drehwinkel des Elektromotors gemessen werden. Bei sehr hoher Untersetzung könnten auch einfach die Umdrehungen der Ankerwelle gemessen werden. Hohe Untersetzungen und erhebliche Reibung sind am einfachsten mit einem Schneckengetriebe zu verwirklichen (Anspruch 4). Das ergibt in Verbindung mit einem hochtourigen Motor sehr kleine Einbaumaße.

Wenn der Mechanismus zur Bewegungsumsetzung und die Reibungskupplung selbst zu steif sind, besteht eine vorteilhafte Weiterbildung darin, dass dort konstruktiv zusätzliche Elastizität geschaffen wird (Anspruch 5). Das kann sowohl durch entsprechende Dimensionierung gewisser Teile als auch durch Einbau einer Feder im Mechanismus oder in der Reibungskupplung selbst erfolgen.

Die Erfindung betrifft weiters ein Verfahren zur Einstellung des von einer Reibungskupplung übertragenen Drehmomentes mittels einer Aktuatorkette, bestehend aus einem Elektromotor, der über ein Untersetzungsgetriebe und einen Mechanismus zur Umsetzung der rotatorischen Bewegung in eine Verschiebung eine Andruckplatte der Kupplung verschiebt. Bei bekannten Verfahren wird zur Einstellung des übertragenen Drehmomentes der Elektromotor nach einem der üblichen Leistungssteuerverfahren angesteuert.

Nach dem erfindungsgemäßen Verfahren wird jedoch aus dem von der Reibungskupplung zu übertragenden Drehmoment (Mₛₒₗₗ) eine Sollstellung eines Gliedes der Aktuatorkette ermittelt und mittels eines auf den Elektromotor einwirkenden Positionsreglers eingestellt (Anspruch 6). Man macht dabei von der oben erläuterten Erkenntnis Gebrauch, dass der Zusammenhang zwischen der Stellung des Gliedes und der Betätigungskraft der Reibungskupplung weitgehend unabhängig von den Reibungsverhältnissen in der Aktuatorkette ist, wenn in dieser in Kraftflussrichtung zuerst ein steifes und reibungsbehaftetes Element und dann elastische Elemente angeordnet sind, soferne der überwiegende Teil der elastischen Elemente nur nach dem sensierten Glied ist. Damit ist eine genaue Verstellung des übertragenen Drehmomentes unter Ausschaltung störender Reibungshystereseeinflüsse erreicht.

Es ist praktisch und spart in dem zugehörigen Steuergerät Speicherplatz, wenn die Ermittlung der Sollstellung des Gliedes für ein von der Reibungskupplung zu übertragendes Drehmoment (Mₛₒₗₗ) anhand einer Kennlinie erfolgt (Anspruch 7). Dabei wird davon Gebrauch gemacht, dass es sich um eine relativ einfache Kennlinie ausreichender Steigung handelt, um sauber definiert Schnittpunkte mit Parallelen zu beiden Koordinatenachsen zu erhalten. Zudem ist die Steigung dieser Kennlinie auch über lange Zeit weitgehend unveränderlich.

In einer bevorzugten Variante des Verfahrens ist das Glied eine Welle des Untersetzungsgetriebes oder des Elektromotors und die Sollstellung ein Soll-Drehwinkel (Anspruch 8).

Zur Einstellung des Ist-Drehwinkels des Elektromotors auf den Soll-Drehwinkel kann ein klassisches Positionsregelverfahren beispielsweise mittels eines PID - Reglers eingesetzt werden. Ein solches reagiert auf die dynamischen Gegebenheiten in der Aktuatorkette jedoch nur auf dem Umweg über die Regelgröße. Es ist jedoch auch möglich, bei der Einstellung des Ist-Drehwinkels auf den Soll-Drehwinkel die neue Stellung mit möglichst hoher Stellgeschwindigkeit anzufahren und bei begleitender Berechnung des Bremsweges rechtzeitig vorher bis zum Stillstand in der Soll-Position abzubremsen.

In einer Weiterbildung des erfindungsgemäßen Verfahrens wird die Kennlinie zumindest bei erstmaliger Betriebsaufnahme kalibriert oder geeicht. Das ist wünschenswert, weil die Kennlinie aufgrund von Fertigungstoleranzen streuen und sich aufgrund von Verschleiss verschieben kann, insbesondere in Richtung der Koordinatenachse Motordrehwinkel. Das kann auch in gewissen Abständen während der Betriebslebensdauer nützlich sein, dann wird die Kennlinie in gewissen Zeitabständen nachgeeicht (Anspruch 11). Für das Eichen der Kennlinie ist das Verfahren nach Anspruch 9 besonders einfach und trotzdem genau.

Der mindestens eine erste Eichpunkt dient der Messung des Motorstromes zur Überwindung der Rückstellfeder. Da die Steigung der Kennlinie bekannt und im Wesentlichen unveränderlich ist, genügt ein erster Eichpunkt. Im zweiten Eichpunkt treten auch bereits Rückstellkräfte der Kupplung selbst auf; der zugehörige Motorstrom wird gemessen, sodass sich der für das Kupplungmoment relevante Motorstrom ergibt. Dadurch, dass der zweite Eichpunkt im Bereich eines kleinen Kupplungsmomentes liegt, wirken sich Fehler nur geringfügig aus. Offsetfehler bei der Strommessung, Toleranzen der Rückstellfeder, Grundreibungen etc. haben auch keinen Einfluss auf die Genauigkeit, weil sie durch Abzug der aus den beiden ersten Eichpunkten gewonnenen Werte herausfallen.

Von mindestens einem ersten Eichpunkt ist die Rede, weil auch in einem weiteren Eichpunkt der Motorstrom zur Überwindung der weiter zusammengedrüclcten Rückstellfeder gemessen werden kann. Vor dieser Prozedur kann durch Ansteuern des Elektromotors in Richtung "Kupplung öffnen" bis zu einem festen Anschlag der 0-Punkt des Drehwinkels von vornherein definiert werden.

Eine Verfeinerung des Eichverfahrens zur Erzielung höchster Genauigkeit besteht darin, dass die drei Eichpunkte Eichintervalle sind, über die der Motorstrom integriert wird, dann wird die Änderung der kinetischen Energie der Aktuatorkette in dem Eichintervall abgezogen und durch die Breite des Intervalles dividiert (Anspruch 10).

Im folgenden wird die Erfindung anhand von Abbildungen beschrieben und erläutert. Es stellen dar:
- Fig. 1:: einen Schnitt durch ein Anwendungsbeispiel einer Reibungskupplung mit der erfindungsgemäßen Vorrichtung,
- Fig. 2:: eine Schema der erfindungsgemäßen Vorrichtung,
- Fig. 3:: die für die erfindungsgemäße Steuerung maßgebende Kennlinie,
- Fig. 4:: ein nach dem Stand der Technik verwendetes Kennfeld,
- Fig. 5:: ein Schema der Eichung der Kennlinie der Fig. 3.

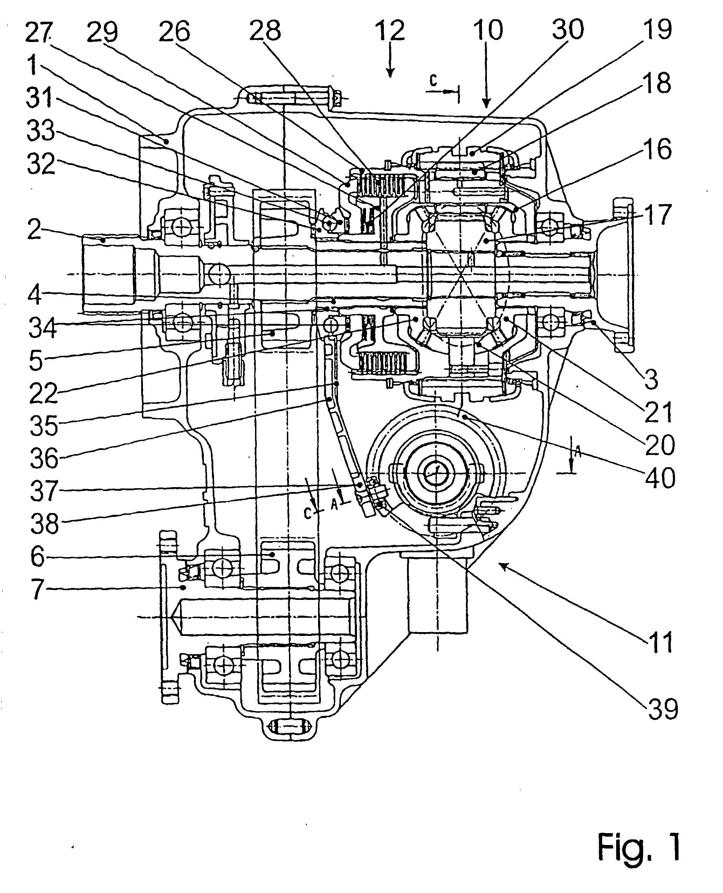

In **Fig. 1** ist das Gehäuse eines Verteilergetriebes insgesamt mit 1 bezeichnet, eine von der nicht dargestellten Antriebseinheit des Fahrzeuges kommende Eingangswelle mit 2, eine mit der Hinterachse antriebsverbundene erste Ausgangswelle mit 3 und eine mit der ebenfalls nicht dargestellten Vorderachse antriebsverbundene zweite Ausgangswelle mit 4. Die zweite Ausgangswelle 4 treibt mittels eines ersten Zahnkettenrades 5 ein zweites Zahnkettenrad 6 unter der Eingangswelle 2, welches auf einer Abtriebswelle 7 für den Antrieb der Vorderachse sitzt.

Zur Verteilung des Drehmomentes auf die beiden Ausgangswellen 3,4 ist ein summarisch mit 10 bezeichnetes Differentialgetriebe vorgesehen. Weiters ist eine Steuereinheit 11 unter dem Differentialgetriebe 10 und eine Sperrkupplung 12 zum Sperren des Differentialgetriebes 10 vorgesehen. In dem gezeigten Ausführungsbeispiel ist die Sperrkupplung baulich mit dem Differentialgetriebe 10 vereint. Sie könnte aber auch getrennt, ja sogar irgendwo anders im Verteilergetriebe bzw. im Antriebszug angeordnet sein. Auch das Differentialgetriebe selbst kann im Rahmen der Erfindung sehr verschieden ausgebildet sein.

In Fig. 1 ist auch eine beispielsweise und besondere Ausführung des Differentialgetriebes erkennbar. Im Inneren des Differentialgehäuses 16, das hier gleichzeitig als Planetenträger dient, befindet sich ein drehfest mit der Eingangswelle 2 verbundenes Sonnenrad 17, im Differentialgehäuse 16 drehbar gelagerte Planetenräder 18 der Geländegangstufe sowie erste Ausgleichsräder 21 und zweite Ausgleichsräder 22. Erstere (21) sind mit der ersten Ausgangswelle 3 und zweitere (22) sind mit der zweiten Ausgangswelle 4 drehfest verbunden. Das Differentialgehäuse 16 ist von einem Hohlrad 19 umgeben, das achsial verschiebbar und im Geländegang mit dem Differentialgehäuse 16 drehfest verbunden ist.

In Fig. 1 ist auch die Sperrkupplung 12 im Detail dargestellt. Sie ist eine Reibungskupplung, besteht aus einem Kupplungsgehäuse 26, das mit dem Differentialgehäuse 16 fest verbunden bzw. hier sogar einstückig ist, einem Kupplungsinnenteil 27 das drehfest mit der zweiten Ausgangswelle 4 verbunden ist, einem Lamellenpaket 28 und einer Andruckplatte 29, die von Rückholfedern 30 in Öffnungsrichtung beaufschlagt ist. Zwischen der Andruckplatte 29 und der zweiten Ausgangswelle, hier insbesondere dem auf dieser sitzenden ersten Zahnkettenrad 5 sind zwei Ringe 31,32 angeordnet. Zwischen diesen Ringen 31,32 befinden sich in entsprechenden Umfangsrillen Kugeln 33. Diese Umfangsrillen sind in einem der Ringe, oder in beiden, als Rampen ausgebildet, sodass bei Relativdrehung der beiden Ringe gegeneinander durch Auflaufen der Kugel auf der Rampe eine Achsialkraft erzeugt wird. Die beiden Ringe 31,32 stehen ganz still, wenn die Kupplung nicht betätigt wird. Zur Drehentkopplung sind daher beide Ringe 31,32 auf Nadellagern 34 gelagert. Der erste Ring 31 besitzt einen ersten Rampenhebel 35, der zweite Ring 32 einen zweiten (36), welche mit einem Ende fest mit dem Ring verbunden sind, nach unten ragen und an ihren freien Enden 37,38 Rollen 39 besitzen. Zwischen den beiden Rollen 39 befindet sich eine drehbare Steuerscheibe 40. Bei Verdrehen dieser Steuerscheibe werden die Rollen 39 auseinanderbewegt und über die scherenartig bewegten Rampenhebel 35,36 die Ringe 31,32 gegeneinander verdreht.

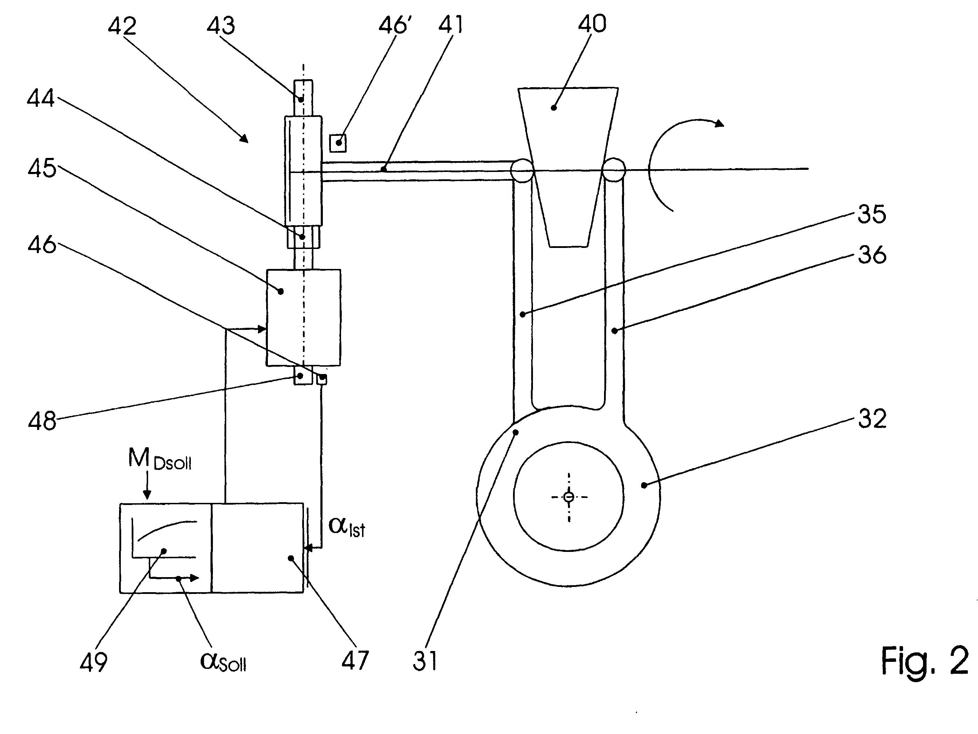

In **Fig. 2** ist die erfindungsgemäße Vorrichtung zur Einstellung des von der Reibungskupplung 12 übertragenen Drehmomentes, die auf die gegeneinander verdrehbaren Ringe 31,32 wirkt, schematisch dargestellt. Die gesamte Aktuatorkette besteht aus einem steuerbaren Elektromotor 45 mit einer Ankerwelle 48, einem aus einem Schneckenrad 43 und einer Schnecke 44 bestehenden Untersetzungsgetriebe 42, und einem Mechanismus zur Umsetzung der rotierenden Bewegung der Ausgangswelle 41 des Untersetzungsgetriebes 42 in eine translatorische Bewegung der Andruckplatte 29 (Fig. 1).

Dieser Mechanismus besteht aus der Ausgangswelle 41 mit der darauf drehfest angebrachten Steuerscheibe 40 und den Ringen 31,32 mit ihren Hebeln 35,36. Das Untersetzungsgetriebe 42 ist ein Schneckengetriebe mit der solcher Getriebe eigenen großen inneren Reibung. Es könnte aber auch ein Getriebe eines anderen Typs sein, das gegebenenfalls mit einem zusätzlichen Reibungselement versehen ist. Die Ausgangswelle 41, die Hebel 35,36 und/oder Teile der Reibungskupplung 12 selbst sind elastisch. Da sie in Serie geschaltet sind, addieren sich ihre Elastiziäten, sodass der Mechanismus insgesamt nachgiebig ist. Reicht das nicht aus, so können einzelne Elemente entsprechend dimensioniert oder zusätzlich elastische Elemente vorgesehen werden.

An der Ankerwelle 48 des Elektromotors 45 ist hier ein Sensor 46 angeordnet, der als Inkrementalgeber ausgebildet, den Verdrehwinkel der Ankerwelle misst. Der Sensor 46 kann alternativ auch als Sensor 46' an der Ausgangswelle 41 angeordnet sein. Wesentlich ist, dass der überwiegende Teil der Elastizität ihm in Kraftflussrichtung nachgeordnet ist. Der Sensor 46 stellt einem Stellungsregler 47 ein Signal zur Verfügung, das hier dem Verdrehwinkel (αᵢₛₜ) der Ankerwelle 48 entspricht. In dem Stellungsregler 47 wird aus dem von der Reibungskupplung zu übertragenden Drehmoment (Mdₛₒₗₗ) anhand einer Kennlinie 49 ein Soll-Verdrehwinkel (αₛₒₗₗ) und aus der Differenz zwischen (αₛₒₗₗ) und (αᵢₛₜ) ein Ansteuersignal für den Elektromotor 45 gebildet.

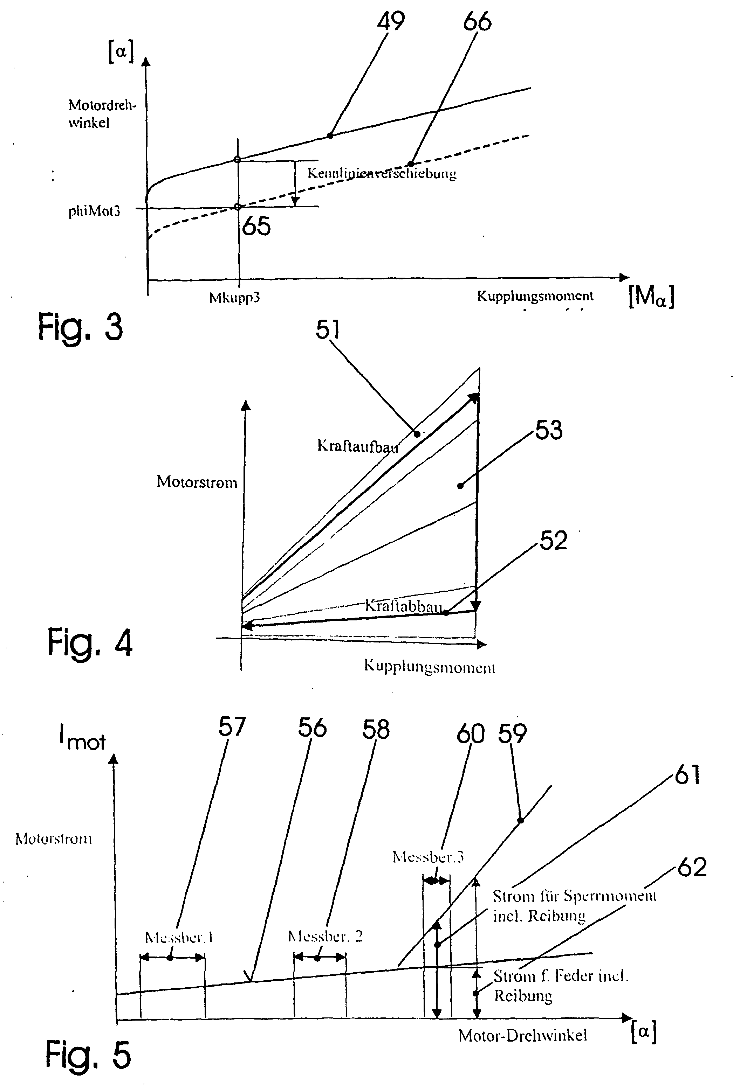

In **Fig. 3** ist die für die erfindungsgemäße Steuerung maßgebende Kennlinie zu sehen. Auf der Ordinate ist das von der Kupplung zu übertragende Drehmoment aufgetragen, auf der Abszisse der entsprechende Drehwinkel (α) der Ankerwelle. Man sieht, dass die Kennlinie 49 eine eindeutige und stetige Kurve ist, die teilweise durch eine Gerade annäherbar ist.

Dem gegenüber steht das in **Fig. 4** abgebildete nach dem Stand der Technik verwendete Kennfeld, in dem auf der Abszisse der als Stellgröße dienende Motorstrom, also die vom Elektromotor ausgeübte Kraft, aufgetragen ist. Zum Erhöhen des übertragenen Momentes gilt die Kennlinie 51, zum Absenken die Kennlinie 52. Die dazwischen liegende Fläche 53 entspricht der Reibungshysterese. Die Kennlinie 52 muss deutlich im positiven Quadranten (das ist der dargestellte) liegen und eine ausreichende Steigung haben, sonst ist eine genaue Einstellung des Momentes praktisch nicht möglich. Man sieht, dass die Kennlinie 52 der Ordinate bedenklich parallel ist und nahe kommt.

Wieder zur Kennlinie 49 der **Fig. 3**, die, wie jede Kennlinie, aufgrund von Fertigungstoleranzen und Kupplungsverschleiß individuell verschieden sein oder sich später verschieben kann, insbesondere in Richtung des Drehwinkels. Deshalb ist jedenfalls bei Betriebsaufnahme, mit Vorteil aber auch später in gewissen Abständen, eine Eichung dieser Kennlinie erforderlich. Diese Eichung oder Kalibrierung wird wie folgt vollzogen:

**Fig. 5** zeigt das Schema der Eichung. Zuerst muss der Nullpunkt für den Drehwinkel definiert werden. Dazu wird der Elektromotor in Richtung "Kupplung lösen" angesteuert, bis ein mechanischer Anschlag erreicht ist. Diese Position, in der der Motor trotz Bestromung steht, ist als Nullpunkt für den Drehwinkel definiert. Diesem Punkt entspricht in Fig. 3 und Fig. 5 die Abszissenachse.

Sodann wird der Motor in Richtung "Kupplung schließen" angesteuert und zwar mit einer Motorspannung, die sicher ausreicht, um ein kleines Kupplungsmoment aufzubauen. Das ist in Fig. 5 als Gerade 56 dargestellt. Dabei werden Motorstrom und Drehwinkel gemessen und zur Kalibrierung der Kennlinie 49 werden drei Eichpunkte,Motorstrom und Drehwinkel gemessen.

Im dargestellten Ausführungsbeispiel sind zur Erzielung besonders hoher Genauigkeit die Eichpunkte durch Eichintervalle 47,58,60 ersetzt. Der Strom wird über das jeweilige Intervall integriert (das entspricht der dem System zugeführten Energie), sodann wird die Änderung der kinetischen Energie der Aktuatorkette in dem jeweiligen Intervall abgezogen und durch die Breite des Intervalles dividiert. Die Integration steigert die Genauigkeit der Messung und ausserdem eliminiert sie den Einfluss der Ungleichförmigkeit des Motormomentes über den Drehwinkel.

Im unteren Bereich des Drehwinkels, in dem nur die Kraft der Rückstellfeder (30 in Fig. 1) zu überwinden ist und noch kein Kupplungsmoment auftritt, liegen die beiden Intervalle 57 und 58. In diesen wird je ein Wert für den zur Überwindung der Kraft der Rückstellfeder erforderlichen Motorstrom ermittelt. Diese werden mit der Geraden 56 verbunden, die somit den Motorstrom darstellt, der zur Überwindung der Rückstellfeder erforderlich ist, deren Federkonstante ist die Steigung der Geraden 56.

In dem dritten Intervall 60, in dem auch bereits Rückstellkräfte aus der Reibungskupplung 12 auftreten (Gerade 59), wird in der oben beschriebenen Weise der Motorstrom ermittelt. Es ist der Motorstrom 61, der zur Überwindung der Rückstellkräfte und der Rückstellfeder erforderlich ist. Durch Abzug des für die Rückstellfeder allein erforderlichen Stromes 62, der durch Verlängerung der Geraden 56 gewonnen wird, ergibt sich der für das übertragene Kupplungsmoment erforderliche Motorstrom. Aus diesem wird das Kupplungsmoment im Eichintervall 60 aus der Differenz der Motorströme 61 und 62, multipliziert mit einem bekannten Faktor berechnet, der in. günstigen Fällen konstant ist. Dieses Kupplungsmoment und der Drehwinkel, bei dem es auftritt, werden nun aus dem Diagramm der Fig. 5 in die Kennlinie 49 der Fig. 3 übertragen. Das ergibt den Punkt 65 und da sich die Steigung der Kennlinie nicht ändert, die korrigierte Kennlinie 65, in Fig. 3 strichliert eingezeichnet.

Dadurch, dass das Intervall 60 in Fig. 5 bei relativ kleinem Kupplungsmoment gewählt wird, wirken sich Fehler bei der Berechnung des Kupplungsmomentes aus dem Motorstrom nur ganz geringfügig aus. Auch der Einfluss der Ungleichförmigkeit des Motormomentes über den Drehwinkel wird durch die Integration über die Intervalle vermieden. Offsetfehler bei der Strommessung, Toleranzen der Rückstellfeder, Grundreibungen etc. haben auch keinen Einfluss auf die Genauigkeit, weil sie durch die Subtraktion des nur für die Überwindung der Rückstellfeder erforderlichen Stromes eliminiert werden.

Dieses Eich- beziehungsweise Kalibrierverfahren kann ebenso wie das gesamte Steuerverfahren auch angewendet werden, wenn nicht der Drehwinkel der Ankerwelle oder einer anderen Welle, sondern die Stellung eines anderen Gliedes herangezogen wird.

## Patentansprüche

1. Vorrichtung zur Einstellung des von einer Reibungskupplung (12) übertragenen Drehmomentes, mit einer aus einem Elektromotor (45), einem Untersetzungsgetriebe (42) und einem Mechanismus zur Umsetzung der rotatorischen Bewegung in eine Verschiebung einer Andruckplatte (29) der Kupplung (12) bestehenden Aktuatorkette, **dadurch gekennzeichnet**,
a) dass Elektromotor (45) und/oder Untersetzungsgetriebe (42) reibungsbehaftet ist/sind,
b) dass der Mechanismus (31,32,35,36,40) zur Umsetzung und/oder die Reibungskupplung (12) selbst elastizitätsbehaftet ist/sind, und
c) dass zur Einstellung des Drehmomentes (Md) der Reibungskupplung (12) ein mit dem Elektromotor (45) wirkverbundener Stellungsregler (47) und ein die Stellung eines der Glieder der Aktuatorkette (45,42,41,40,36,35,32,31,29) bestimmender Sensor (46;46') vorgesehen ist,
d) wobei der Sensor (46;46') an einer Stelle angeordnet ist, die in Kraftflussrichtung vor einem wesentlichen Teil des Mechanismus und/oder der Reibungskupplung liegt, das elastizitätsbehaftet ist.

2. Vorrichtung nach Anspruch 1, **dadurch gekennzeichnet, dass** der Sensor (46,46') an einer Welle (41; 48) des Untersetzungsgetriebes (42) oder des Elektromotors (45) angeordnet ist.

3. Vorrichtung nach Anspruch 2, **dadurch gekennzeichnet, dass** der Sensor (46) ein Inkrementalgeber an der Ankerwelle (48) des Elektromotors (45) ist.

4. Vorrichtung nach Anspruch 1, **dadurch gekennzeichnet, dass** das Untersetzungsgetriebe (42) ein Schneckengetriebe ist.

5. Vorrichtung nach Anspruch 1, **dadurch gekennzeichnet, dass** im Mechanismus (31,32,35,36,40) zur Umsetzung der rotatorischen Bewegung in eine Verschiebung und/oder in der Reibungskupplung (12) eine Elastizität konstruktiv vorgesehen ist.

6. Verfahren zur Einstellung des von einer Reibungskupplung (12) übertragenen Drehmomentes (Md) mittels einer Aktuatorkette (45,42,41,40,36,35, 32, 31, 29), bestehend aus einem Elektromotor(45), der über ein Untersetzungsgetriebe (42) und einen Mechanismus (31,32,35,36,40) zur Umsetzung der rotatorischen Bewegung in eine Verschiebung einer Andruckplatte (29) der Kupplung bewirkt, **dadurch gekennzeichnet, dass** aus dem von der Reibungskupplung zu übertragenden Drehmoment (Mdₛₒₗₗ) eine Sollstellung (αₛₒₗₗ) eines Gliedes der Aktuatorkette ermittelt und mittels eines auf den Elektromotor (45) einwirkenden Reglers (47) eingestellt wird.

7. Verfahren nach Anspruch 6, **dadurch gekennzeichnet, dass** die Ermittlung der Sollstellung (αₛₒₗₗ) eines Gliedes für ein bestimmtes von der Reibungskupplung (12) zu übertragendes Drehmoment (Mₛₒₗₗ) anhand einer Kennlinie (49) erfolgt.

8. Verfahren nach Anspruch 6, **dadurch gekennzeichnet, dass** die Sollstellung eines Gliedes ein Drehwinkel (αₛₒₗₗ) einer Welle (48;41) des Elektromotors (45) oder des Untersetzungsgetriebes (42) ist.

9. Verfahren nach Anspruch 8, **dadurch gekennzeichnet, dass** zur Eichung der Kennlinie (49) folgende Schritte gesetzt werden:
- Ansteuern des Elektromotors in Richtung "Kupplung schließen", bis von der Reibungskupplung ein kleines Drehmoment übertragen wird, wobei in mindestens zwei Eichpunkten (57,60; 58,60) Messungen von Motorstrom (lₘₒₜ) und Motordrehwinkel (αᵢₛₜ) vorgenommen werden:
- ein erster Eichpunkt (57;58) ist im Lüftbereich der Reibungskupplung, ein zweiter (60) in einem Bereich, in dem ein kleines Drehmoment übertragen wird,
- im zweiten Eichpunkt (60) wird nach einer bekannten Funktion aus dem Motorstrom in den zwei Eichpunkten (57,60; 58,60) das Kupplungsmoment berechnet,
- aus dem Kupplungsmoment und dem Motordrehwinkel im zweiten Eichpunkt (60) folgt die Verschiebung der Kennlinie (49).

10. Verfahren nach Anspruch 9, **dadurch gekennzeichnet, dass** die Eichpunkte (57,58,60) Eichintervalle sind, über die der Motorstrom integriert wird, wobei zur Ermittlung der Verschiebung der Kennlinie (49) die kinetische Energie der Aktuatorkette (45,42,41,40,36,35, 32, 31, 29) abgezogen und durch die Breite des jeweiligen Intervalles dividiert wird.

11. Verfahren nach Anspruch 9, **dadurch gekennzeichnet, dass** die Kennhnie (49) in gewissen Zeitabständen nachgeeicht wird.

## Claims

1. Apparatus for adjusting the torque transmitted by a friction clutch (12), having an actuator chain comprising an electric motor (45), a reduction transmission (42) and a mechanism for converting the rotational movement into a displacement of a pressure plate (29) of the clutch (12), **characterised in that**
a) the electric motor (45) and/or the reduction transmission (42) is/are subjected to friction,
b) the conversion mechanism (31, 32, 35, 36, 40) and/or the friction clutch (12) itself is/are subjected to the effect of elasticity, and
c) for adjusting the torque (Md) of the friction clutch (12) there is provided a position regulator (47) operatively connected to the electric motor (45) and a sensor (46; 46') for determining the position of one of the members of the actuator chain (45, 42, 41, 40, 36, 35, 32, 31, 29),
d) wherein the sensor (46; 46') is arranged at a location which in the direction of the flow of force, is upstream of a substantial part of the mechanism and/or the friction clutch, which is subjected to the effect of elasticity.

2. Apparatus according to claim 1 **characterised in that** the sensor (46; 46') is arranged at a shaft (41; 48) of the reduction transmission (42) or the electric motor (45).

3. Apparatus according to claim 2 **characterised in that** the sensor (46) is an incremental sensor at the armature shaft (48) of the electric motor (45).

4. Apparatus according to claim 1 **characterised in that** the reduction transmission (42) is a worm transmission.

5. Apparatus according to claim 1 **characterised in that** elasticity is structurally provided in the mechanism (31, 32, 35, 36, 40) for converting the rotational movement into a displacement and/or in the friction clutch (12).

6. A method of adjusting the torque (Md) transmitted by a friction clutch (12) by means of an actuator chain (45, 42, 41, 40, 36, 35, 32, 31, 29) comprising an electric motor (45) which acts by way of a reduction transmission (42) and a mechanism (31, 32, 35, 36, 40) for converting the rotational movement into a displacement of the pressure plate (29) of the clutch, **characterised in that** a reference position (αₛₒₗₗ) of a member of the actuator chain is ascertained from the torque (Mdₛₒₗₗ) to be transmitted by the friction clutch and is adjusted by means of a regulator (47) acting on the electric motor (45).

7. A method according to claim 6 **characterised in that** the operation of ascertaining the reference position (αₛₒₗₗ) of a member for a given torque (Mₛₒₗₗ) to be transmitted by the friction clutch (12) is effected on the basis of a characteristic curve (49).

8. A method according to claim 6 **characterised in that** the reference position of a member is a rotary angle (αₛₒₗₗ) of a shaft (48; 41) of the electric motor (45) or the reduction transmission (42).

9. A method according to claim 8 **characterised in that** the following steps are effected to calibrate the characteristic curve (49):
- actuation of the electric motor in the 'close clutch' direction until a small torque is transmitted by the friction clutch, wherein measurements of motor current (Iₘₒₜ) and motor rotary angle (αᵢₛₜ) are effected at at least two calibration points (57, 60; 58, 60);
- a first calibration point (57; 58) is in the clearance range of the friction clutch and a second (60) is in a range in which a low level of torque is transmitted,
- at the second calibration point (60) the clutch moment is calculated in accordance with a known function from the motor current at the two calibration points (57, 60; 58, 60), and
- displacement of the characteristic curve (49) follows from the clutch moment and the motor rotary angle at the second calibration point (60).

10. A method according to claim 9 **characterised in that** the calibration points (57, 58, 60) are calibration intervals over which the motor current is integrated, wherein to ascertain the displacement of the characteristic curve (49) the kinetic energy of the actuator chain (45, 42, 41, 40, 36, 35, 32, 31, 29) is deducted and divided by the width of the respective interval.

11. A method according to claim 9 **characterised in that** the characteristic curve (49) is re-calibrated at certain time intervals.

## Revendications

1. Dispositif de réglage du couple de rotation transmis par un embrayage à friction (12), comportant une chaîne d'actionneurs formée par un moteur électrique (45), un démultiplicateur (42) et un mécanisme destiné à transformer un mouvement de rotation en un mouvement de translation d'une platine de pression (29) de l'embrayage (12), **caractérisé en ce que** :
a) le moteur électrique (45) et/ou le démultiplicateur (42) est/sont à friction,
b) le mécanisme (31, 32, 35, 36, 40) de transformation de mouvement et/ou l'embrayage à friction (12) lui-même a/ont une élasticité, et
c) pour le réglage du couple de rotation (Md) de l'embrayage à friction (12), il est prévu un régulateur de position (47) en liaison active avec le moteur électrique (45), et un capteur (46 ; 46') déterminant la position de l'un des éléments de la chaîne d'actionneurs (45, 42, 41, 40, 36, 35, 32, 31, 29),
d) le capteur (46 ; 46') étant disposé à un emplacement situé, par référence au sens du flux des forces, en amont d'une partie importante du mécanisme et/ou de l'embrayage à friction qui a une élasticité.

2. Dispositif selon la revendication 1, **caractérisé en ce que** le capteur (46 ; 46') est disposé sur un arbre (41 ; 48) du démultiplicateur (42) ou du moteur électrique (45).

3. Dispositif selon la revendication 1, **caractérisé en ce que** le capteur (46) est un capteur incrémentiel, disposé sur l'arbre d'induit (48) du moteur électrique (45) .

4. Dispositif selon la revendication 1, **caractérisé en ce que** le démultiplicateur (42) est un engrenage à vis sans fin.

5. Dispositif selon la revendication 1, **caractérisé en ce que**, dans le mécanisme (31, 32, 35, 36, 40) destiné à transformer un mouvement de rotation en un mouvement de translation et/ou dans l'embrayage à friction (12), il est prévu une élasticité générée par le mode de construction.

6. Procédé de réglage du couple de rotation (Md) transmis par un embrayage à friction (12) au moyen d'une chaîne d'actionneurs (45, 42, 41, 40, 36, 35, 32, 31, 29), formée par un moteur électrique (45), un démultiplicateur (42) et un mécanisme (31, 32, 35, 36, 40) destiné à transformer un mouvement de rotation en un mouvement de translation d'une platine de pression (29) de l'embrayage (12), **caractérisé en ce qu'**une position de consigne (αₛₒₗₗ) d'un élément de la chaîne d'actionneurs est déterminée à partir du couple de rotation (Mdₛₒₗₗ) à transmettre par l'embrayage à friction (12) et est réglée au moyen d'un régulateur (47) agissant sur le moteur électrique (45).

7. Procédé selon la revendication 6, **caractérisé en ce que** la détermination de la position de consigne (αₛₒₗₗ) d'un élément de la chaîne est effectuée par référence à une courbe caractéristique (49) pour un couple de rotation (Mdₛₒₗₗ) déterminé à transmettre par l'embrayage à friction (12).

8. Procédé selon la revendication 6, **caractérisé en ce que** la position de consigne d'un élément de la chaîne est un angle de rotation (αₛₒₗₗ) d'un arbre (48 ; 41) du moteur électrique (45) ou du démultiplicateur (42).

9. Procédé selon la revendication 8, **caractérisé en ce que**, pour l'étalonnage de la courbe caractéristique (49), on applique les étapes suivantes :
- activation du moteur électrique dans le sens « fermeture de l'embrayage », jusqu'à ce qu'un faible couple de rotation soit transmis par l'embrayage à friction, des mesures du courant du moteur (Iₘₒₜ) et de l'angle de rotation du moteur (αᵢₛₜ) étant effectuées en au moins deux points d'étalonnage (57, 60 ; 58, 60) ;
- un premier point d'étalonnage (57 ; 58) se situe dans la zone de ventilation de l'embrayage à friction (12), et un deuxième (60) se situe dans une zone dans laquelle est transmis un faible couple de rotation ;
- dans le deuxième point d'étalonnage (60), on calcule le couple d'embrayage dans les deux points d'étalonnage (57, 60 ; 58, 60) selon une fonction connue à partir du courant du moteur ;
- le décalage de la courbe caractéristique (49) résulte du couple d'embrayage et de l'angle de rotation du moteur dans le deuxième point d'étalonnage (60).

10. Procédé selon la revendication 9, **caractérisé en ce que** les points d'étalonnage (57, 58, 60) sont des intervalles d'étalonnage par l'intermédiaire desquels est intégré le courant du moteur, sachant que pour déterminer le décalage de la courbe caractéristique (49), on tire l'énergie cinétique de la chaîne d'actionneurs (45, 42, 41, 40, 36, 35, 32, 31, 29), et on la divise par la largeur de l'intervalle correspondant.

11. Procédé selon la revendication 9, **caractérisé en ce que** l'étalonnage de la courbe caractéristique (49) est corrigé à intervalles de temps déterminés.
